# EUROPEAN PATENT SPECIFICATION

(11) **EP 2 210 801 B1**
(45) Date of publication and mention of the grant of the patent: **25.01.2012**
(21) Application number: 09001040.6
(22) Date of filing: 26.01.2009
(51) Int. Cl.: B62J 35/00, B62K 11/00, B62J 37/00, F02M 37/10

(54) **Motorcycle with particular arrangement of fuel tank, fuel pump and air cleaner**
Motorrad mit einer speziellen Anordnung von Benzintank, Benzinpumpe und Luftfilter
Motocyclette avec une disposition particulière du réservoir de carburant, de la pompe à carburant et de l'épurateur d'air

(43) Date of publication of application: 28.07.2010
(73) Proprietor: YAMAHA MOTOR EUROPE N.V., 1119 NC Schiphol-Rijk (NL)
(72) Inventor: Pozzi, William, 20052 Monza (MI) (IT); Ghezzi, Alessandro, 20052 Monza (IT); Shigeta, Toshiharu, 20148 Milano (IT)
(74) Representative: Grünecker, Kinkeldey, Stockmair & Schwanhäusser

(56) References cited:
- EP-A- 1 138 584
- EP-A- 1 254 830
- EP-A- 1 584 548
- EP-A- 1 602 567
- WO-A-2008/126476
- JP-A- 2003 148 267
- JP-A- 2006 131 028
- JP-A- 2008 196 432
- US-A- 4 484 651
- US-A- 4 781 264
- US-A1- 2008 011 534
- US-A1- 2008 210 203

## Description

The present invention relates to the field of motorcycles. In particular, the present invention relates to the way component parts of said motorcycle are located and/or reciprocally disposed. In more detail, the present invention relates to the location and reciprocal disposition of the fuel tank, the air cleaner and/or the fuel pump of said motorcycle. Still in more detail, the present invention relates to the shape of component parts of a motorcycle such as, for instance, the fuel tank and the air cleaner. Finally, the present invention relates to the way the fuel pump is located inside the fuel tank and fixed thereto.

As it is well known in the automotive field, motorcycles are equipped with a fuel pump, the purpose of which is that of collecting fuel from the fuel tank and delivering the collected fuel to the injection system of the motorcycle. This in particular applies to usual motorcycles, such as, for instance, 2-wheeled motorbikes and/or other 3 or 4 wheeled motorcycles, such as choppers, quads or the like. To this end, the fuel pumps usually used comprise a collecting portion adapted to collect fuel from the fuel tank, along with a delivering portion adapted to deliver the collected fuel to the injection system of the motorcycle. Moreover, at least a fuel pipe is provided, extending from said delivering portion of the fuel pump to said injection system of the motorcycle. Moreover, the collecting portion of the fuel pump is usually located inside the fuel tank, whereas the delivering portion thereof and the fuel pipe extending therefrom are usually placed outside the fuel tank. However, finding a convenient location for both the collecting and the delivering portion of the fuel pump and the fuel pipe extending therefrom has revealed itself to be a difficult task; in particular, this is due to the fact that the location of the delivering portion of the fuel pump influences the overall layout of the motorcycle, whilst the collecting portion influences both the dimensions and the shape of the fuel tank. Moreover, even if delivering portions of reduced overall dimensions can be used, it appears clearly that the space occupied by said delivering portion can no longer be used for locating other component parts of the motorcycle. Furthermore, even the performance of the fuel pump strongly depends on the location of the delivering portion. With respect to the reciprocal disposition of the delivering portion of the fuel pump and the injection system of the motorcycle, it has to be noted that once a convenient location for the delivering portion of the fuel pump has been found, a pipe has to be provided for connecting said delivering portion of the fuel pump to the injection system of the motorcycle; this, however, may become quite difficult when the delivering portion of the fuel pump is placed far away from the injection system of the motorcycle. In fact, in this case, the length of the fuel pipe may become relevant, so that it may become difficult to find a convenient path and/or location for the fuel pipe. Moreover, it has to be avoided that the fuel pipe gets disconnected from the fuel pump (the delivering portion thereof) and/or the injection system during use of the motorcycle, due to vibration or the like. Accordingly, corresponding fixation means have to be provided. Finding a corresponding adequate location for said fixation means may however also be reveal to be difficult and/or troublesome. In terms of performance of the fuel pump and the injection system, in combination, it has to be noted that the pressure of the fuel along the fuel pipe depends on the length of the fuel pipe and decreases from a maximum value in proximity to the fuel pump and along said fuel pipe. Accordingly, it may come out that, in the case of a fuel pipe of relevant length, the pressure of the fuel in proximity to the injection system decreases to a value under the minimum value required for the correct functioning of the injection system. Further requirements to be taken into account relate to the fact that, placing the fuel pump far away from the injection system may pose serious problems during maintenance of the motorcycle, since it may become difficult to gain access to said fuel pump or to said fuel pipe extending therefrom.

It is also well known in the field of motorcycles that motorcycles with a combustion engine have to be provided with an air cleaner or air cleaning device; accordingly, a convenient location even for said air cleaner has to be found. In this respect, it has, in particular, to be noted that a convenient location for the air cleaner means a location which does not influence the overall layout and/or dimensions of the motorcycle and which does not negatively affect the performance of said air cleaner.

Still another requirement to be taken into account relates to the fact that, placing the fuel pump (or at least the collecting portion thereof) inside the fuel tank influences both the overall dimension and the shape of the fuel tank since the fuel tank has to be big enough for receiving said fuel pump but also a convenient quantity of fuel. However, simply increasing the overall dimensions of the fuel tank does not represent a convenient solution in many cases; for instance, a reason for that relates to the fact that the seat and the fuel tank are usually located and shaped so that the upper surface of the seat matches with the upper surface of the fuel tank so as to realize a kind of continuous surface. However, a big fuel tank usually means that the upper surface thereof is located at a higher position above the ground; accordingly, either the upper surface of the seat will not match with the upper surface of the fuel tank or the upper surface of the seat is located too high above the ground. Both these solutions may not be considered in several cases for evident reasons. With the fuel pump (or at least the connecting portion thereof) received inside of the fuel tank, the shape of the fuel tank is also influenced by the fuel pump; in turn, the shape of the fuel tank influences the overall appearance and/or look of the motorcycle as well as the possibility of conveniently locating and disposing other component parts of the motorcycle.

In an attempt to meet as many as possible of the criteria and/or requirements outlined above, several solutions have been proposed in recent years by the manufacturers of motorcycles; one of these solutions is disclosed in the Japanese patent application laid-open publication number 2005-47404. According to this solution, a fuel tank is disposed above the air cleaner (connected to the engine) whilst the fuel pump is located inside the fuel tank and in a position so as to overlap with the air cleaner in the vertical direction. However, according to this solution, the overall height of the motorcycle is unduly increased since the fuel tank and the fuel pump are disposed above the air cleaner. These solutions cannot therefore be adopted in the case of motorcycles for which the overall dimensions have to be kept contained. It has also been proposed to use fuel tanks wherein the portion thereof adapted to receive the fuel pump extends toward the ground; however, according to this solution, too less space is left under the fuel tank so that at least some of those component parts which are usually located under the fuel tank need to be located in different positions. Moreover, with the fuel pump fixed to the bottom wall of the fuel tank, problems or troubles can be encountered both during assembly of the motorcycles or, even when the need arises, to remove the fuel pump from the fuel tank, for instance during maintenance or due to damages to the fuel pump. Finally, with the fuel pump mounted on the bottom wall of the fuel tank, leakages of fuel may not always be avoided; in particular, this is the case when fuel tanks of plastic material are used since the dimensions of the plastic fuel tank may vary depending on the external conditions, in particular on the external temperature. However for some applications, plastic fuel tanks may be preferred due to their low costs.

A further example of a layout relating to the fuel pump for motorcycles is disclosed in document EP1602567, on which the preamble of claim 1 is based.

Therefore, it results from the above that in spite of all the efforts made, the solutions proposed in the past and known in the prior art do not always meet all the essential requirements which have to be taken into consideration during the design of a motorcycle. In particular, the proposed solutions do not meet the need according to which at least the fuel tank and the air cleaner have to be reciprocally disposed according to a layout offering good performance in terms of functionality and simplified assembly and/or maintenance operations, as well as in terms of the overall look, appearance and contained dimensions of the motorcycle. In particular, the prior art solutions do not meet the need of proposing an adequate shape for the fuel tank allowing the fuel pump located inside said fuel tank to be conveniently positioned and oriented. Finally, the solutions proposed in the past do not meet the need of proposing an improved layout for the fuel tank, the air cleaner and the injection system of the motorcycle, in combination.

Accordingly, in view of the above, it is an object of the present invention to provide a motorcycle with an improved layout according to which at least the fuel tank and the air cleaner are conveniently located so as to allow improved performance of said air cleaner and to avoid undue increase of the overall dimensions of the motorcycle. Another object of the present invention is that of providing a motorcycle wherein the fuel tank, the air cleaner and the injection system of the motorcycle are located and/or reciprocally disposed according to a convenient layout allowing improved performance of at least said air cleaner and said injection system without unduly increasing the overall dimension, in particular the overall height of the motorcycle. It is also an object of the present invention to provide a fuel tank with an improved shape allowing to conveniently position and locate the fuel pump inside said fuel tank. Still another object of the present invention is that of providing a fuel tank with an improved shape allowing to position at least the air cleaner and said injection system in proximity to said fuel tank, in particular without unduly increasing the height at which said fuel tank is located. With the improved shape of the fuel tank according to an embodiment of the present invention, it is also possible to maintain the upper surface of said fuel tank at a convenient height, in particular so that said upper face can match the upper face of the seat of the motorcycle, thus forming a continuous surface.

In general terms, the present invention is based on the consideration that the problems affecting the prior art layouts relating to the fuel tank, the air cleaner and the fuel injection system may be overcome or at least strongly reduced by locating the air cleaner in a space behind the fuel tank when viewed from a side of the motorcycle. A further consideration on which the present invention is based relates to the fact that the performance of the air cleaner can be improved, without affecting the overall dimension of the motorcycle, when said air cleaner is provided with an air suction, the suction port of which faces the fuel tank of the motorcycle. Further important considerations on which the present invention is based relate to the fact that, by opportunely and adequately shaping the fuel tank, it is possible to locate the air cleaner behind the fuel tank but still close to or in proximity to said fuel tank. Moreover, still according to the present invention, if the fuel tank is opportunely shaped, not only the air cleaner may be located behind the fuel tank and close to it, but also the fuel injection system may be located (at least partially) under said fuel tank and still without unduly increasing the height at which the fuel tank is located. Moreover, another consideration on which the present invention is based relates to the fact that, if the fuel tank is opportunely shaped, the fuel pump can be conveniently located inside the fuel tank without any need to unduly increase the overall dimension of said fuel tank. Moreover, still according to the present invention, by opportunely shaping and orienting the wall of the fuel tank to which the fuel pump is fixed, also the fuel pump can be conveniently oriented and still without any need of unduly reducing the capacity of the fuel tank. Moreover, by opportunely shaping and orienting the wall of the fuel tank to which the fuel pump is fixed, it is also possible to store enough reserve fuel inside the fuel tank.

On the basis of the considerations as stated above, the above mentioned problems posed are overcome by the features stated in independent claim 1.

Further embodiments and/or features of the present invention are laid down in the dependent claims.

Further advantages, objectives, features as well as further embodiments of the present invention will become more apparent with the following detailed description when taken with reference to the accompanying drawings, in which identical or corresponding parts are identified by the same reference numerals.

In particular, in the drawings:
FIG. 1 relates to a side view of a motorcycle according to an embodiment of the present invention;
FIG. 2 relates to a side view of a body frame of the motorcycle with an engine mounted on it;
FIG. 3 relates to a side view of a fuel tank mounted on the body frame;
FIG. 4 relates is a cross-sectional side view of the fuel tank of figure 3;
FIG. 5 relates to a cross-sectional side view of a fuel pump disposed in the fuel tank;
FIG. 6 relates to a cross-sectional view (taken along a line VI-VI in FIG. 4) of the fuel tank;
FIG. 7 relates to a cross-sectional view (taken along a line VII-VII in FIG. 4) of the fuel tank;
FIG. 8 relates to a cross-sectional view (taken along a line VIII-VIII in FIG. 4) of the fuel tank;
FIG. 9 relates to a cross-sectional view (taken along a line IX-IX in FIG. 4) of the fuel tank.

While the present invention is described with reference to the embodiments as illustrated in the following detailed description as well as in the drawings, it should be understood that the following detailed description as well as the drawings are not intended to limit the scope of the present invention to the particular illustrated embodiments disclosed and/or depicted therein, but rather that the described illustrated embodiments merely exemplify the various aspects of the present invention, the scope of which is defined by the appended claims.

The present invention is understood to be of particular advantage when applied to two wheeled motorcycles, such as, for instance, motorbikes. For this reason, examples will be given in the following, in which corresponding embodiments of the exhaust gas purifying apparatus according to the present invention are applied to motorcycles. However, it has to be noted that the applications of the exhaust gas purifying apparatus according to the present invention are not limited to the case of motorbikes; on the contrary, the exhaust gas purifying apparatus according to the present invention may also be applied to other motorcycles, in particular, to three or even four wheeled motorcycles such as, for instance, choppers, quads or the like.

In the following, some details and features of the present invention will be described with reference to the drawings wherein corresponding or equivalent features are identified by corresponding reference numerals. Moreover, in both the drawings and the following disclosure, terms such as, for instance, front, rear, left and right have to be understood as meaning respectively front, rear, left and right as used from the perspective of the person sitting on the motorcycle implementing the present invention. Moreover, in the following description, two identical reference numerals are used for identifying "left and right" component parts, even if only one of said two components parts is depicted in the drawings; for instance, if the description refers to a right and a left cover, with only the left cover being depicted in the drawings, said left and right covers are identified by indicating the same reference numerals twice; in the same way, when the description refers to a component part identified by two identical reference numerals (for instance 19, 19), the description has to be understood as meaning that a left and a right component part are provided.

In the drawings, reference numeral 1 relates to a motorcycle with an improved layout according to the present invention; in particular, in the drawings there is depicted an off-road motorcycle. However, it appears clearly from the following disclosure that the applications of the present invention are not limited to the case of off-road motorcycles but comprise any kind of motorcycles.

The motorcycle 1 comprises a main frame 2, an engine 3 mounted on (or supported by) the body frame 2, an exhaust gas system 4 extending from said engine 3 and an air intake system 9 (to be described in more details in the following) connected to the engine 3.

The motorcycle 1 further comprises rear arms 5, 5 pivotally connected to the body frame 2 so as to swing up and down and rotatably supporting a rear wheel 12 on a rear end portion thereof; a rear wheel suspension system 6 is disposed between the rear arms 5 and the body frame 2.

Moreover, the motorcycle 1 comprises a front fork 8 supported by a head pipe 7 to be steered leftward and rightward, said head pipe 7 being positioned at a front end portion of the body frame 2; a fuel tank 10 is mounted at the front end portion of the body frame 2, and a seat 11 is mounted behind the fuel tank 10.

A front wheel 13 is rotatably supported on lower end portions of the front fork 8 and a steering handlebar 14 is fixed to an upper end portion of the front fork 8.

The motorcycle 1 further comprises an exterior cover 15 covering an essential or substantial portion of the vehicle body. The exterior cover 15 comprises in particular left and right front side covers 15a, 15a covering a front portion of the main frame 2 along with left and right side faces of the fuel tank 10; said left and right covers 15a, 15a work as an air scoop for guiding air so as to flow against the engine 3. Left and right rear side covers 15b, 15b cover a lower portion of the seat 11, whilst a rear cover 15c is provided so as to be adjacent or contiguous to the left and right rear side covers 15b so as to cover a rear upper portion of the seat 11.

The body frame 2 (in the following also referred to as main frame) comprises the head pipe 7, left and right main tubes 16, 16 extending rearward and diagonally downward from an upper portion of the head pipe 7 while extending apart outward in a vehicle width direction, along with a down tube 17 extending substantially linearly, downward, and rearward, from a lower portion of the head pipe 7.

The left and right main tubes 16, 16 comprise tank rail portions 16a, 16a respectively, supporting the fuel tank 10 and rear-arm bracket portions 16b, 16b respectively, to which front end portions of the rear arms 5, 5 are pivotally connected by means of a pivot shaft 18. A radiator 21 is mounted on a front portion of the down tube 17.

Moreover, the main frame 2 comprises left and right seat rails 19, 19 extending rearward and substantially linearly from rear end portions of the left and right tank rail portions 16a, 16a, along with left and right seat tubes 20, 20 connecting midway portions of the left and right rear-arm bracket portions 16b, 16b and rear portions of the seat rails 19, 19.

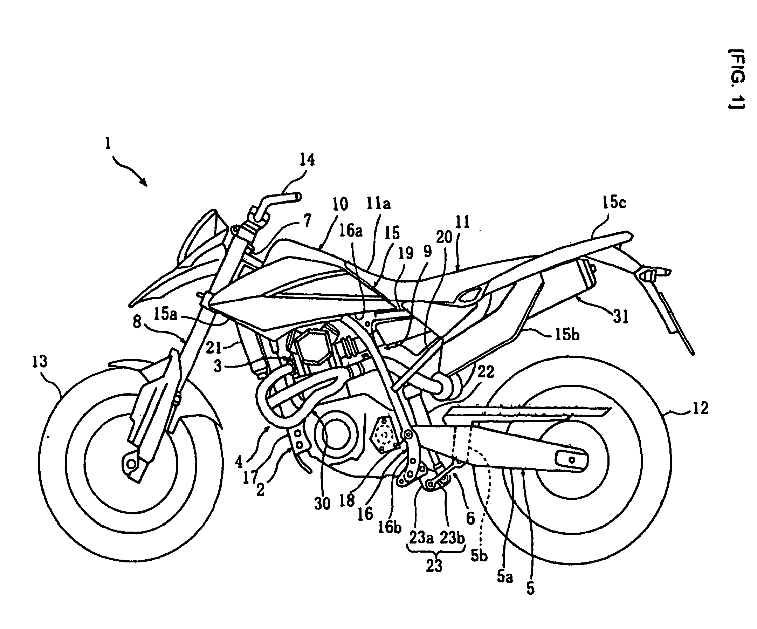

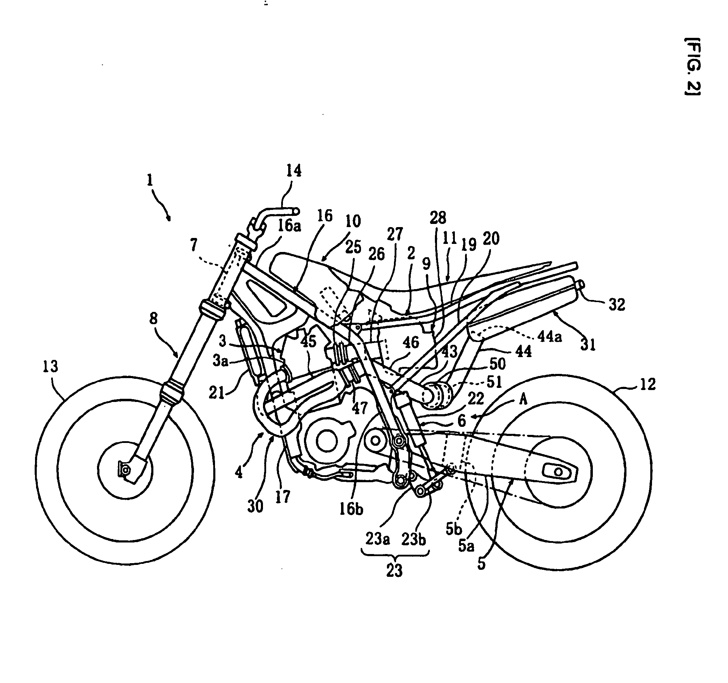

The seat 11 is detachably mounted on the left and right seat rails 19, 19. A front portion 11 a of the seat 11 is formed so as to extend to cover an upper face of a rear portion of the fuel tank 10. As apparent in particular from figures 1 and 2, the upper surfaces of the fuel tank 10 and the seat 11 match each other so as to form a kind of continuous surface.

The rear arms 5, 5 comprise left and right arm portions 5a, 5a extending in a front-back direction and a cross portion 5b connecting midway portions of the left and right arm portions 5a, 5a.

The rear wheel suspension system 6 comprises a buffer 22 and a linkage mechanism 23. The buffer 22 is located in the space which is defined, in the width direction of the motorcycle 1, by the left and right arm portions 5a, 5a this space being further defined, in the front-back direction of the motorcycle, by the pivot shaft 18 and by the cross portion 5b which extends in the width direction and connects left and right arm portions 5a, 5a; moreover, the buffer 22 is located substantially at the center of this space in the vehicle width direction. As apparent, in particular from Figures 1 and 2, the buffer 22 is located close to the rear-arm bracket portions 16b, 16b of the left and right main tubes 16, 16 and extends substantially parallel to said rear-arm bracket portions 16b, 16b i.e. the buffer is inclined forward in the counterclockwise direction with the upper portion of the buffer being inclined toward the front of the motorcycle as viewed from a lateral side of the vehicle. It appears clearly that buffers of any kind (for instance hydraulic or pneumatic buffers or even buffers comprising a coil spring) can be used and/or implemented according to the present invention.

The linkage mechanism 23 comprises a triangular first link 23a connected to the lower end portions of the left and right rear-arm bracket portions 16b, 16b, said linkage mechanism 23 further comprising a rod-shaped second link 23b connecting the first link 23a and the cross portion 5b which connects the rear arms 5, 5. The lower end portion of the buffer 22 is connected to the first link 23a whilst the upper end portion of the buffer 22 is connected to a bridge portion interposed between the left and right rear-arm bracket portions 16b, 16b.

Still with reference to Figures 1 to 3, it appears that the engine 3 is located between the left and right main tubes 16, 16 and the down tube 17. For instance, said engine may be a water-cooled-4-cycle single-cylinder engine; however, within the scope of the present invention, other engines can be used such as, for instance, multiple-cylinder engines and/or air-cooled engines.

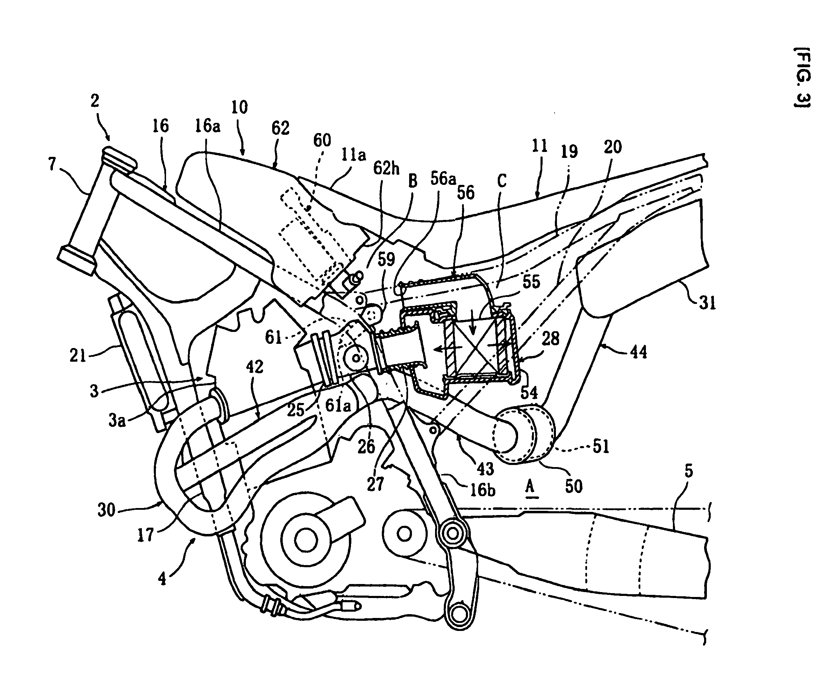

In the following, with reference in particular to Figure 3, further details and features of the of the motorcycle 1 will be described. In Figure 3, those features already described above with reference to previous figures are identified by the same reference numerals.

As apparent from Figure 3, the exhaust gas system 4 extends from a front wall of the cylinder head 3a of the engine 3; in particular, the exhaust gas system 4 comprises an exhaust gas main pipe 30 connected to an exhaust gas port open in the front wall of the cylinder head 3a and a muffler 31 connected to a downstream end portion of the exhaust gas main pipe 30.

The muffler 31 is located substantially below or under a rear portion of the seat 11; moreover, said muffler 31 is in a box shape and may comprise an upper member and a lower member (not depicted in the drawings) joined together. For instance, the upper member and the lower member may be joined together by welding together flange portions (also not depicted in the drawings) formed at peripheral edge portions of said upper and lower members. However, depending on the needs and/or circumstances, other solutions may be adopted for joining together the upper and lower members. For instance, screws, clips or the like may be used.

Still with reference in particular to Figure 3, it appears clearly that the exhaust gas main pipe 30 comprises a front-back extending portion 42 extending in the front-back direction on the left side of the engine 3; moreover, the exhaust gas main pipe 30 comprises a vehicle-width extending portion 43 extending from a downstream end portion of the front-back extending portion 42 toward the right side (the opposite side) in the vehicle with direction. The exhaust main pipe 30 comprises an upward extending portion 44 extending upward and slightly rearward from a downstream end portion of the vehicle-width extending portion 43.

The vehicle-width extending portion 43 extending from the front-back extending portion 42 runs through a space A defined by the engine 3 in particular by the buffer 22 and the rear wheel 12; i.e. said portion 43 extends rightward in the vehicle width direction. In particular, the vehicle-width extending portion 43 is located or received in the space A defined and/or limited by the engine 3 or even the buffer 22 and the rear wheel 12 in the front back direction, by the rear arms 5 in the width direction and by said rear arms 5 and the air cleaner 28 in the upward direction.

The vehicle-width extending portion 43 extends substantially horizontally in the vehicle width direction and extends diagonally rearward as viewed from above the vehicle. Along the vehicle-width extending portion 43 substantially at the center thereof there is formed a catalyst receiving portion 50 having a larger diameter than the vehicle-width extending portion 43, a catalyst 51 for purifying exhaust gas being received in said catalyst receiving portion 50.

The upward extending portion 44 contiguous to the vehicle-width extending portion 43 extends rearward, diagonally upward, and linearly between the buffer 22 and the rear wheel 12 in the space A and behind the air intake system 9. A downstream port of the upward extending portion 44 is connected to a front wall portion of the muffler 31.

The front-back extending portion 42 comprises an upper first exhaust pipe and a lower second exhaust pipe joined together at their rear end portions.

The upper first exhaust pipe extends substantially linearly forward and downward from the join portion and bends to surround a front portion of the down tube 17 of the main frame 2.

The lower second exhaust pipe extends forward and downward from the join portion and bends upward to form a substantially semicircular shape on the left side of the down tube 17.

Upstream ports of the first and second exhaust pipe portions are connected to the front wall of the cylinder head 3a. Exhaust ports open on the front wall are formed by dividing one exhaust opening formed in the cylinder head 3a into two and leading them out; the first and second exhaust pipes are connected to the respective exhaust ports.

The motorcycle 1 further comprises an air intake system 9 connected to a rear wall of the cylinder head 3a of the engine 3. Said air intake system 9 comprises a throttle body 26 connected to an intake port open in the rear wall of said cylinder head 3a by a joint member 25 and an air cleaner 28 is connected to the throttle body 26 by an intake duct 27. The throttle body 26 and the intake duct 27 are disposed in the front-back direction substantially along a straight line.

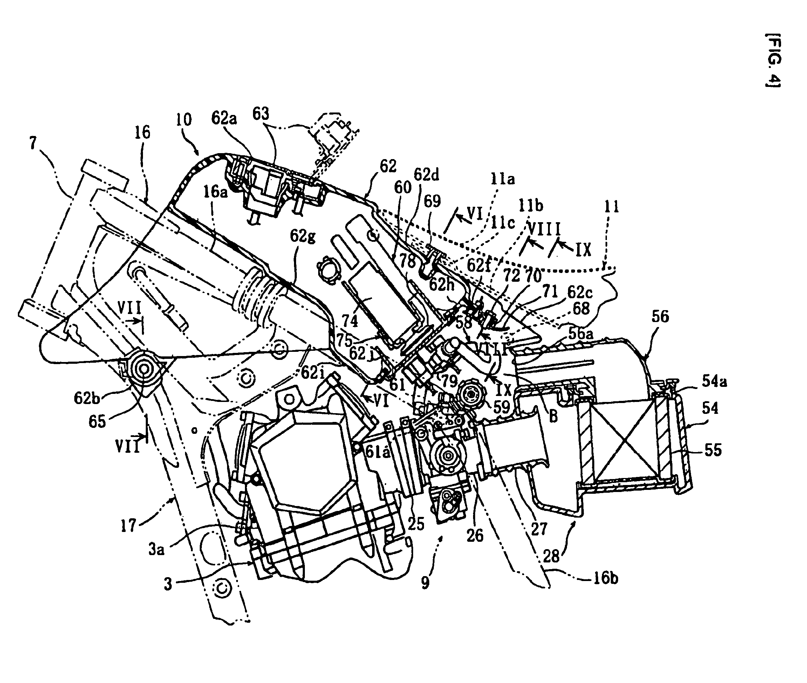

In the following, with reference in particular to Figures 4 to 9, further details and features of the present invention will be described. In Figures 4 to 9, those features already described above with reference to previous figures are identified by the same reference numerals.

The air cleaner 28 is located below or under the seat 11, and behind the fuel tank 10; moreover, the air cleaner 28 is located so as to be at a lower position than said fuel tank 10. In particular, the air cleaner 28 is disposed in a space C below the seat 11 and surrounded or defined or even limited by the main frame tubes 16, 16, the seat rails 19, 19 and the seat stays 20, 20 as viewed from a lateral side of a vehicle (for a viewer looking at the motorcycle 1 from a side).

The air cleaner 28 comprises a cleaner case 54 to which the intake duct 27 is connected, an air filter 55 being received in said case or housing 54 (inserted from an opening 54a formed on an upper wall of the cleaner case 54), an air suction duct 56 being detachably mounted on the cleaner case 54 so as to close the opening 54a.

The air suction duct 56 is substantially L-shaped and comprises a first portion extending from an upper wall of said case 54, along with a second portion extending from said first portion and bent toward a front side of the vehicle. A front end of the air suction duct 56 is formed with a suction port 56a open forward and facing toward the front of the motorcycle.

The fuel tank 10 comprises a tank body 62 for storing fuel. For instance, said tank body can be made of resin; however, depending on the needs and/or circumstances, the tank body 62 may be made of other materials such as metal or the like. A fuel cap 63 is provided for opening and closing a fuel filler opening 62a formed at a front end portion of an upper wall of the tank body 62.

It appears in particular from Figure 4 that the tank body 62 and the air suction duct 56 at least overlap when viewed from the front and the rear of the motorcycle 1; in more details, the lowermost portion or end of the tank body 62 is at a position lower (in the vertical direction) than the uppermost portion or endof the air suction duct 56 of the air cleaner 28.

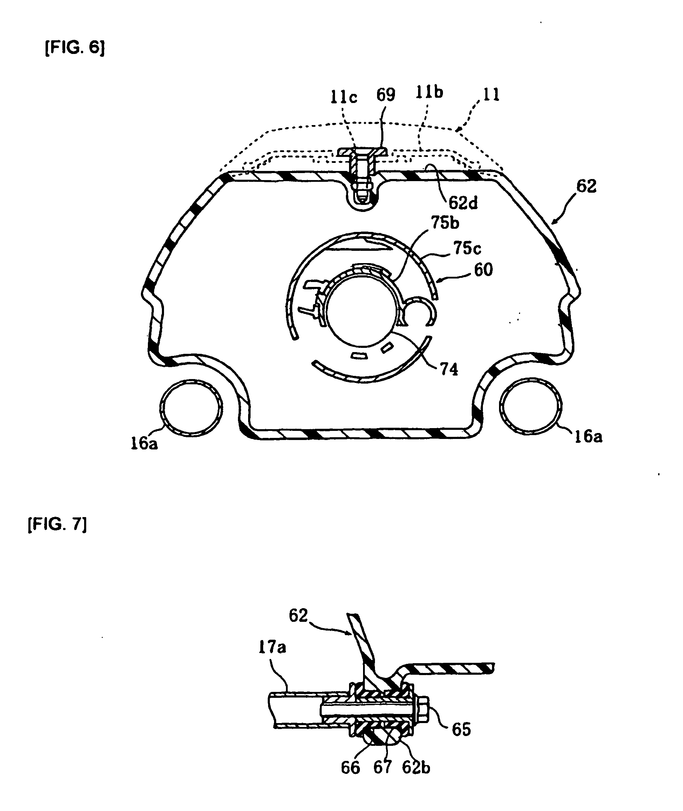

At left and right portions of both the front end portion and the rear end portion of the tank body 62, there are provided front and rear mount boss portions 62b, 62c formed integrally with said tank body 62. Each of the left and right front mount boss portions 62b, 62b is fixed by a front bolt 65 to a pipe member 17a coupled to the down tube 17 to protrude outward with a collar 66 and a rubber damper 67 interposed therebetween (see FIG. 7).

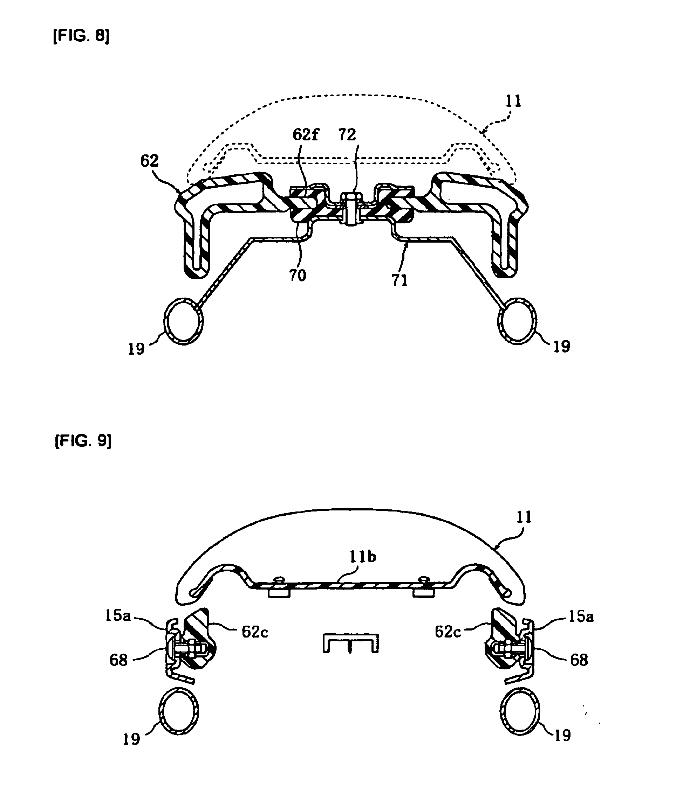

The left and right rear mount boss portions 62c, 62c are fixed by rear bolts 68 to the front side covers 15a (see FIG. 9).

A flange portion 62f, integrally formed with the tank body 62 extends from a rear upper edge portion of said tank body 62 so as to protrude rearward. Said flange portion 62f is fixed by means of a bolt 72 to a gate-shaped tank bracket 71 fixed to the left and right seat rails 19 with an elastic member 70 made of rubber or the like interposed therebetween (see FIG. 8). In this way, the tank body 62 is elastically mounted on and/or supported by the body frame 2.

The upper wall (the rear portion thereof) of the tank body 62 is formed with a lower step portion 62d and the front portion 11 a of the seat 11 is disposed in said lower step portion 62d. As a result, the tank body 62 and the seat 11 form a substantially continuous face. That means that the upper surface of the tank body 62 and that of the seat 11 march each other so as to define a kind of continuous surface.

The lower step portion 62d comprises an engagement pin 69 protruding upward therefrom. A corresponding engagement hole 11c is formed in a bottom plate 11 b of the seat 11 so as to be adapted to detachably engage with the corresponding engagement pin 69. Further or improved stability of the seat 11 is therefore obtained.

The tank body 62 of the tank 10 further comprises a bottom wall 62g extending forward at an angle with respect to the vertical direction so as to slope diagonally upward (with the upper portion of said bottom wall facing toward the front of the motorcycle 1); said tank body 62 further comprises a rear wall 62h extending rearward so as to form an angle with respect to both the vertical direction and the bottom wall 62g, thus sloping diagonally upward from a rear edge of the bottom wall 62g (the bottom portion of the rear wall 62h faces toward the back of the motorcycle).

A rear end portion of the bottom wall 62g is formed with a bulging portion 62i bulging downward so that reserve fuel can be conveniently stored is stored in the bulging portion 62i.

The motorcycle 1 further comprises a fuel pump 60 disposed in the fuel tank 10 to pressurize and discharge fuel; there is also provided a fuel injection valve 61 for injecting and supplying the fuel coming from the fuel pump 60 to the engine 3, along with a fuel supply hose or pipe (in the following also referred to as fuel supply passage) 58 connecting the fuel injection valve 61 to the fuel pump 60.

The fuel injection valve 61 is mounted on an upper wall (on a portion of said upper wall) of the throttle body 26, the fuel injection port 61 a of said fuel injection valve 61 being oriented in a direction of an axis of the intake port and so as to face toward the front of the motorcycle 1. A fuel supply rail 59 is connected to the fuel injection valve 61 and a downstream end port 58a of the fuel supply hose 58 is connected to the fuel supply rail 59.

The fuel pump 60 is inserted through a mount hole 62j formed in the rear wall 62h of the tank body 62, said fuel pump being fixed to or mounted on said rear wall 62h so as to extend forward; in more details, said fuel pump 60 has the following structure.

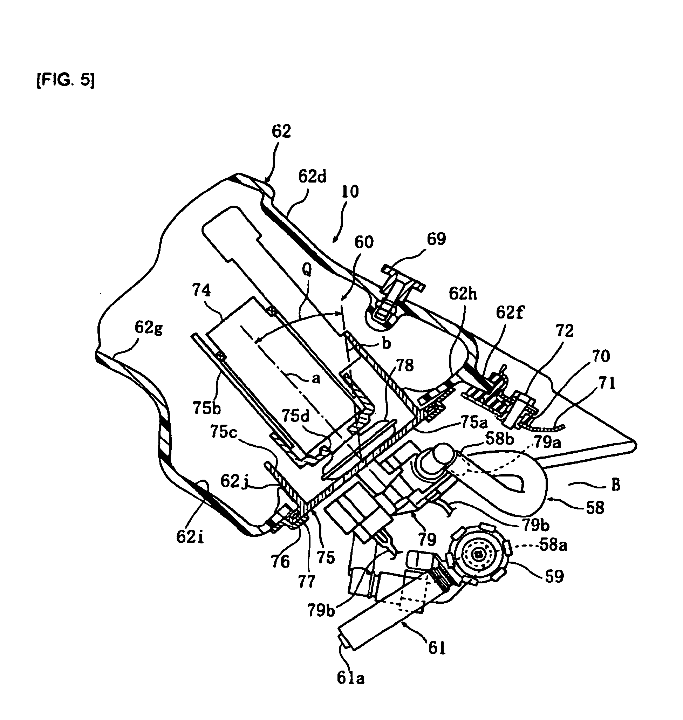

As apparent in particular from Figures 4 and 5, the fuel pump 60 comprises a pump main body 74 adapted to draw and pressurize the fuel; moreover, a mount member 75 is provided for mounting the pump body 74 on the fuel tank 10.

The mount member 75 comprises in particular a mount plate 75a adapted to be disposed on the rear wall 62h in correspondence of the mount hole 62j so as to close said mount hole 62j; a pump case 75b (adapted to receive said pump main body 74) extends from the mount plate 75a into the tank body 62 with the pump body 74 received therein. Furthermore, said mount member defines a fuel reservoir portion 75c formed so as to surround an outer peripheral portion of the pump case 75b as shown in FIG. 5. By providing the fuel reservoir portion 75c, fuel can be retained in the fuel reservoir portion 75c and it is possible to stably supply fuel to the engine 3 even if a posture of the vehicle body changes due to acceleration and deceleration during travelling or slopes.

The mount plate 75a is mounted on the rear wall 62h with a seal member 77 interposed therebetween; to this end, a ring plate 76 is mounted on an outer peripheral portion of the mount plate 75a by means of a bolt (not shown in the drawings).

A bottom portion of the pump case 75b is formed so as to define a fuel suction hole 75d allowing the fuel pump to collect fuel from the fuel reservoir portion 75c; a fuel filter 78 is mounted on the fuel suction hole 75d.

Outside the mount plate 75a, a fuel supply portion 79 communicating with and connected to a fuel discharge port of the pump body 74 is mounted. The fuel supply portion 79 is formed with a fuel supply port 79a and an upstream end port 58b of the fuel supply hose 58 is connected to the fuel supply port 79a. At the fuel supply portion 79, lead wires 79b for supplying power to the pump body 74 are arranged.

The fuel pump 60 is disposed so as to be substantially perpendicular with respect to the rear wall 62h and extends forward from the rear wall 62h while sloping diagonally upward. In more details, the fuel pump 60 is inclined forward (with its upper portion facing toward the front of the motorcycle) so that its axis a forms an angle θ that is about 40° with respect to a vertical line b. However, depending on the needs and/or circumstances the fuel pump 60 can be disposed and/or oriented inside the fuel tank 10 so as to form angles different angles with respect to the vertical line b.

The fuel injection valve 61 is located in proximity (or near or even close) to a lower portion of the rear wall 62h of the tank body 62 whilst the fuel supply hose 58 is arranged between the fuel injection valve 61 and the rear wall 62h. In particular, as viewed from a lateral side of the vehicle, the fuel injection valve 61 and the fuel supply hose 58 are disposed in a space B surrounded or defined or even limited by the rear wall 62h of the tank body 62, the throttle body 26, and the air cleaner 28.

The suction port 56a of the air suction duct 56 is open in the space B. The space B is less likely to be affected by heat coming from the engine 3 and therefore rise in temperatures of fuel and intake air is inhibited or at least strongly reduced.

As viewed from behind the vehicle, the air suction duct 56 of the air cleaner 28 overlaps (at least partially) with the rear wall 62h of the tank body 62. The suction port 56a of the air suction duct 56 is disposed substantially in the same vertical position as the rear wall 62h and faces toward the tank body 62 of the fuel tank 10 (toward its rear wall 62h).

As viewed from above the vehicle, the front portion 11 a of the seat 11 overlaps with the fuel pump 60. In other words, a front end of the seat 11 is positioned forward of a rear end of the fuel pump 60. That means that the fuel pump 60 is disposed near a portion of the tank body 62 under the lower step portion 62d where the front portion 11 a of the seat 11 positioned.

According to the motorcycle 1 of the present embodiment, the air cleaner 28 is disposed behind the fuel tank 10. Therefore, the fuel tank 10 can be disposed in a low position without interfering with the air cleaner 28. As a result, it is possible to keep low the position of the fuel tank 10 while securing necessary tank capacity; this in turn allows to keep the overall height of the motorcycle as reduced as needed. Moreover, since the fuel tank 10 can be kept as low as needed, also the height of the seat 11 can be kept as low as needed, and eventually with the upper surface of the fuel tank matching the upper surface of the seat so as to form a kind of continuous surface.

Moreover, with the fuel pump 60 disposed inside the fuel tank so as to slope forward and diagonally upward from the rear wall 62h of the fuel tank, also an inconvenient increase in height of the fuel tank 10 can be avoided, this also resulting in a contained overall height of the motorcycle.

Furthermore, by disposing the suction port 56a of the air suction duct 56 of the air cleaner 28 so as to face toward the rear wall 62h, with said the air suction duct 56 of the air cleaner 28 being also disposed so as to overlap with the rear wall 62h as viewed from behind the vehicle further advantages are obtained in terms of contained and/or reduced overall height of the motorcycle, in particular when the lowermost portion or end of the fuel tank 10 is positioned so as to be lower than the uppermost portion or end of the air cleaner 28.

Moreover, with the rear wall 62h of the fuel tank 10 sloping rearward and diagonally upward, with the fuel pump 60 being mounted on the rear wall 62h so as to extend forward, further advantages are obtained. In particular, the fuel injection valve 61 can be disposed below and/or under the rear wall 62h with the fuel injection valve 61 and the fuel pump 60 being connected by the fuel supply hose 58. As a result, the fuel pump 60 and the fuel injection valve 61 are close to each other and therefore it is possible to shorten length of the fuel supply hose 58 to be arranged. Moreover, space is saved.

Furthermore, with the fuel pump 60 being disposed so as to overlap with the front portion 11 a of the seat 11 as viewed from above the vehicle or, in other words, with the front end of the seat 11 being positioned forward of the rear end of the fuel pump 60, it is possible to extend the seat 11 up to the upper face of the fuel tank 10 while keeping low the height position of the seat 11, which renders it easy for a rider or driver to move to the front portion 11a of the seat 11.

It arises therefore from the above disclosure that the present invention allows for overcoming or at least for strongly reducing the problems affecting the prior art layouts. In particular, with the present invention, evident advantages in terms of improved functionality of the fuel pump and the air cleaner and improved fuel capacity of the fuel pump, as well as in terms of contained dimensions and improved overall look and appearance as well as aerodynamics of the motorcycle are obtained.

While the present invention has been described with reference to the particular embodiments depicted in the drawings, it has to be understood that the present invention is not limited to the particular embodiments described. For instance, while the a motorcycle has been described above according to which the vehicle-width extending portion 43 of the exhaust main pipe is located in the space A between the engine 3 and the rear wheel 12 (or even between the rear buffer and the rear wheel 12) so as to extend substantially horizontally, with said vehicle-width extending portion 43 comprising the catalyst receiving portion 50, it has to be noted that the present invention also comprises the embodiment according to which the catalyst receiving portion 50 extends substantially vertically; in this case, further advantages in terms of contained or reduced dimension of the vehicle body (in particular in the vehicle width direction) are obtained. Moreover, even if the present invention has been described with reference to the embodiment according to which the main pipe 4 (in particular the front-back extending portion 42 thereof) extends from the engine along the left side of the engine, with the vehicle-width extending portion 43 and/or the catalyst receiving portion 50 extending from the left side to the right side, the present invention also comprises the embodiment according to which the main pipe 4 extends from the engine 3 on the right side thereof; in this case, the vehicle-width extending portion 43 and the catalyst receiving portion 50 extend from the right side to the left side.

The scope of the present invention is therefore defined by the appended claims.

## Claims

1. A motorcycle (1) comprising a body frame (2), a fuel tank (10) supported by said body frame (2) and an air cleaner (28) wherein said air cleaner (28) is located in a space behind said fuel tank (10) in a front-back direction of said motorcycle (1) namely when viewed from a side of said motorcycle (1); so that said fuel tank (10) and said air cleaner do not overlap when viewed from above; said fuel tank (10) comprising a tank body (62) with a rear wall (62h) facing toward the back of said motorcycle (1), with the lowest portion of said rear wall (62h) of said fuel tank (10) being positioned so as to be lower than the uppermost portion of said air cleaner (28) in the vertical direction **characterized in that** said rear wall (62h) is inclined with respect to both the vertical and the horizontal direction with the top portion of said rear wall (62h) facing toward the back of said motorcycle (1), and **in that** a fuel pump (60) is disposed inside said fuel tank (10) and mounted on said rear wall (62h) so as to extend forward.

2. A motorcycle as claimed in claim 1,
**characterized In that** said air cleaner (28) comprises an air suction duct (56) with an air suction port (56a) facing toward said rear wall (62) of said fuel tank (10).

3. A motorcycle as claimed in on of claims 1 to 2, further comprising:
an engine (3) supported by said body frame (2) and
a fuel injection valve (61) for injecting and supplying fuel to said engine (3), **characterized in that** said rear wall (62) at least partially overlaps with said fuel injection valve (61) when viewed from above said motorcycle (1).

4. A motorcycle as claimed in one of claims 1 to 3, said fuel pump (60) comprising a fuel discharge portion (79), **characterized in that** a fuel discharge port (79a) of said fuel discharge portion (79) is connected to said fuel injection valve (61) by a fuel supply passage (58).

5. A motorcycle as claimed in one of claims 1 to 4 said motorcycle further comprising a seat (11) supported by said body frame (2), **characterised in that** a front end of said seat (11) is positioned forward with respect to a rear end of said fuel pump (60).

## Patentansprüche

1. Motorrad (1), das einen Karosserierahmen (2), einen Kraftstofftank (10), der von dem Karosserierahmen (2) getragen wird, und einen Luftfilter (28) umfasst, wobei sich der Luftfilter (28), von einer Seite des Motorrades (1) gesehen, in einer Längsrichtung des Motorrades (1) in einem Raum hinter dem Kraftstofftank (10) befindet, so dass der Kraftstofftank (10) und der Luftfilter (28) einander, von oben gesehen, nicht überdecken, der Kraftstofftank (10) einen Tank-Körper (62) mit einer hinteren Wand (62h) umfasst, die zur Rückseite des Motorrades (1) hin gewandt ist, und der niedrigste Abschnitt der hinteren Wand (62h) des Kraftstofftanks (10) so positioniert ist, dass er tiefer liegt als der oberste Abschnitt des Luftfilters (28) in der vertikalen Richtung, **dadurch gekennzeichnet, dass** die hintere Wand (62h) in Bezug sowohl auf die vertikale als auch die horizontale Richtung geneigt ist, wobei der obere Abschnitt der hinteren Wand (62h) der Rückseite des Motorrades (1) zugewandt ist, und **dadurch**, dass eine Kraftstoffpumpe (60) in dem Kraftstofftank (10) angeordnet und so an der hinteren Wand (62h) angebracht ist, dass sie sich nach vorn erstreckt.

2. Motorrad nach Anspruch 1,
**dadurch gekennzeichnet, dass** der Luftfilter (28) eine Luftansaugleitung (56) mit einem Luftansauganschluss (56a) umfasst, der der hinteren Wand (62) Kraftstofftanks (10) zugewandt ist.

3. Motorrad nach Ansprüchen 1 bis 2, das des Weiteren umfasst:
einen Motor (3), der von dem Karosserierahmen (2) getragen wird, und
ein Kraftstoffeinspritzventil (61) zum Einspritzen und Zuführen von Kraftstoff zu dem Motor (3),
**dadurch gekennzeichnet, dass** sich die hintere Wand (62) und das Kraftstoffeinspritzventil (61), von oberhalb des Motorrades (1) gesehen, wenigstens teilweise überlappen.

4. Motorrad nach einem der Ansprüche 1 bis 3, wobei die Kraftstoffpumpe (60) einen Kraftstoffabgabeabschnitt (79) umfasst, **dadurch gekennzeichnet, dass** ein Kraftstoffabgabeanschluss (79a) des Kraftstoffabgabeabschnitts (79) über einen Kraftstoffzuführkanal (58) mit dem Kraftstoffeinspritzventil (61) verbunden ist.

5. Motorrad nach einem der Ansprüche 1 bis 4, wobei das Motorrad des Weiteren einen Sitz (11) umfasst, der von dem Karosserierahmen (2) getragen wird, **dadurch gekennzeichnet, dass** ein vorderes Ende des Sitzes (11) vor einem hinteren Ende der Kraftstoffpumpe (60) angeordnet ist.

## Revendications

1. Motocycle (1) comprenant un cadre (2), un réservoir de carburant (10) supporté par le cadre (2), et un filtre à air (28), étant précisé que le filtre à air (2) se trouve dans un espace situé derrière le réservoir de carburant (10), dans un sens avant-arrière du motocycle (1), c'est-à-dire quand on regarde un côté du motocycle (1) ; de sorte que le réservoir de carburant (10) et le filtre à air ne se recouvrent pas, vus de dessus ; le réservoir de carburant (10) comprenant un corps de réservoir (62) avec une paroi arrière (62h) qui est dirigée vers l'arrière du motocycle (1), la partie la plus basse de ladite paroi arrière (62h) du réservoir de carburant (10) étant positionnée de manière à se trouver plus bas que la partie supérieure du filtre à air (28) dans le sens vertical, **caractérisé en ce que** ladite paroi arrière (62h) est inclinée par rapport au sens vertical et au sens horizontal, la partie supérieure de la paroi arrière (62h) étant dirigée vers l'arrière du motocycle (1), et **en ce qu'**une pompe à carburant (60) est disposée à l'intérieur du réservoir de carburant (10) et est montée sur la paroi arrière (62h) de manière à s'étendre vers l'avant.

2. Motocycle selon la revendication 1, **caractérisé en ce que** le filtre à air (28) comprend un conduit d'aspiration d'air (56) avec un orifice d'aspiration d'air (56a) qui est dirigé vers la paroi arrière (62) du réservoir de carburant (10).

3. Motocycle selon l'une des revendications 1 à 2, comprenant par ailleurs :
un moteur (3) supporté par le cadre (2), et
une soupape d'injection de carburant (61) pour l'injection et l'amenée de carburant dans le moteur (3),
**caractérisé en ce que** la paroi arrière (62) recouvre au moins en partie la soupape d'injection de carburant (61), quand on regarde le motocycle (1) de dessus.

4. Motocycle selon l'une des revendications 1 à 3, la pompe à carburant (60) comprenant une partie de décharge de carburant (79), **caractérisé en ce qu'**un orifice de décharge de carburant (79a) de la partie de décharge de carburant (79) est relié à la soupape d'injection de carburant (61) par un passage d'amenée de carburant (58).

5. Motocycle selon l'une des revendications 1 à 4, comprenant par ailleurs un siège (11) supporté par le cadre (2), **caractérisé en ce qu'**une extrémité avant du siège (11) est placée à l'avant par rapport à une extrémité arrière de la pompe à carburant (60).
